# EUROPEAN PATENT SPECIFICATION

(11) **EP 0 651 494 B1**
(45) Date of publication and mention of the grant of the patent: **15.07.1998**
(21) Application number: 94308024.2
(22) Date of filing: 01.11.1994
(51) Int. Cl.: H02K 1/24, H02K 15/02

(54) **Method of manufacturing an alternator rotor**
Verfahren zur Herstellung eines Rotors für einen Wechselstromgenerator
Procédé de fabrication d'un rotor d'alternateur

(30) Priority: 02.11.1993 JP 274549/93; 02.11.1993 JP 274551/93
(43) Date of publication of application: 03.05.1995
(73) Proprietor: HINO JIDOSHA KOGYO KABUSHIKI KAISHA, Hino-shi Tokyo 191 (JP)
(72) Inventor: Otaka, Hideki, Hino-shi, Tokyo 191 (JP); Saito, Kenji, Hino-shi, Tokyo 191 (JP); Hasegawa, Kouhei, Hino-shi, Tokyo 191 (JP)
(74) Representative: Bardo, Julian Eason

(56) References cited:
- FR-A- 2 347 814
- US-A- 3 445 694
- US-A- 5 016 340
- PATENT ABSTRACTS OF JAPAN vol. 14 no. 125 (E-900) ,8 March 1990 & JP-A-01 318532 (HITACHI) 25 December 1989,
- PATENT ABSTRACTS OF JAPAN vol. 16 no. 18 (E-1155) ,17 January 1992 & JP-A-03 235653 (SEYKO EPSON) 21 October 1991,

## Description

### Technical field

This invention is utilized in the manufacture of alternators, and relates to auxiliary generators that are linked to the rotation of an internal combustion engine. It was developed as an alternator for automobiles, but can be utilized for other alternators as well.

### Prior art

Combining two roundel-type poles as the rotor for an alternator is a known technology. As shown in **Fig.11** (sectional view), **Fig.12** (perspective view), **Fig.13** (side view) and **Fig.14** (perspective view), such a rotor has first rotor member 1 on which a plurality of teeth 11 have been formed, and which is fitted to rotating shaft 3. It also has second rotor member 2 which is formed in the same cylindrical surface as teeth 11 of said first rotor member 1, and in a shape that will mutually mesh with said teeth 11. Said second rotor member 2 rotates together with said first rotor member 1. Field coil 4 is arranged in the space provided between these two rotor members 1 and 2 and rotating shaft 3, and stator 5 and stator coils 6 are arranged on the outside of the two rotor members 1 and 2. Second rotor member 2 is welded to first rotor member 1 on its inside using ring 7 which is made of a non-magnetic material.

Alternators with this construction have come into wide use because of the superior design which makes slip rings and brushes unnecessary, due to field coil 4 being fixed and not on the rotor side of the device.

As explained above, in an alternator rotor with this sort of construction, first rotor member 1 and second rotor member 2 are manufactured separately and welded together using ring 7. This ring 7 is formed of a non-magnetic material so that it does not interfere with the lines of magnetic force that pass between teeth 11. However, this welding process has a number of drawbacks. It has to be carried out in a narrow gap, there is a large variability in product shape, and as a matter of course there is an increased proportion of defective products, so that manufacturing manhours increase. Another drawback is that expensive equipment such as laser beam welding apparatus is required.

Alternator rotors with this construction have conventionally been manufactured by hot forging. Namely, first rotor member 1 and second rotor member 2 are forged separately from steel in such manner that each acquires the desired shape with a plurality of teeth 11. Such a manufacturing method therefore has the following drawbacks: large variability in product shape, increased proportion of defective products, and increased manufacturing manhours.

Another method of manufacturing an alternator rotor is described in FR-A-2 347 814. The method of one of the embodiments described therein includes providing a preformed ferrous tube and then forming serrations (which in the finished rotor member form the teeth) in the tube by a series of die punching operations. In the other embodiment described therein, two identical toothed strips are cut from a single strip of magnetic material, the rotor members being then manufactured from these toothed strips.

Attempts have been made to improve the efficiency of power supply units by increasing the number of teeth and thereby increasing the frequency of the alternating current generated by the alternator. However, if these teeth were formed with a smaller pitch, it would be necessary to perform the aforementioned welding process in a still narrower gap, which means that manufacturing manhours and the proportion of defective products would further increase. It is therefore difficult to increase the number of teeth beyond the number presently employed.

### Purposes of the invention

This invention has been devised in the light of the situation described above, and its purpose is to provide an alternator rotor and a manufacturing method therefor, said rotor being capable of being welded from the outside, due to an improvement in the shape of the rings that serve to assemble the two rotor members. Another purpose of this invention is to provide an alternator rotor which is such that the proportion of defective products and the manufacturing manhours can be decreased, and the number of teeth can be made larger. Further purposes of this invention are to reduce the cost of an alternator rotor, to increase its precision, and in turn to improve the electrical efficiency of the alternator. Yet another purpose of this invention is to prevent teeth being deformed to the outside by centrifugal force during high-speed rotation: this being achieved by having the rings which ioin the two rotor members placed on the outside.

### Disclosure of the invention

According to the invention, there is provided a method of manufacturing an alternator rotor having first and second rotor members provided with teeth, the method including a process wherein a cylindrically-shaped magnetic material is cut to match the shape of the teeth of the first rotor member characterised in that the process of cutting the cylindrically-shaped magnetic material forms two members, one of which is made into the first rotor member, and the other member is made into the second rotor member. The cylindrically-shaped magnetic material can have a shape obtained by bending one end of tube stock inwards, or it can have a cup shape in which one end is closed. It is desirable to include a process wherein a boss is joined to the aforementioned first rotor member, and a process wherein the aforementioned first rotor member and the aforementioned second rotor member are respectfully machined.

That is to say, a cup shape may be formed by bending one end of tubular magnetic material, and this is then cut into shapes with a plurality of teeth which will constitute poles, after which the shapes are separated. The cutting may be carried out by a milling cutter, or by a high-density energy source such as a plasma arc or a laser beam. This makes it possible to increase the number of poles, whereby the electrical efficiency can be increased. In addition, workability in subsequent processing can be improved, variability in product quality eliminated, and yield increased.

According to a further aspect of the invention the rotor that is manufactured is a rotor in which the second rotor member is so arranged that its teeth are positioned in the spaces in the cylindrical surface formed by the teeth of the first rotor member, and the method further comprises providing two rings, each of which is laid across the tips of the teeth of one of the aforementioned two rotor members and across the bases of the teeth of the other rotor member, thereby mechanically joining the two rotor members.

Grooves into which the aforementioned two rings are fitted are formed in the aforementioned two rotor members, and it is desirable for these two rings to be formed from a non-magnetic material.

In other words, the second rotor member is arranged so that its teeth are positioned in the spaces in the cylindrical surface of the first rotor member on which a plurality of teeth have been formed, and each of the two rings is laid across the tips of the teeth of one of the aforementioned two rotor members and across the bases of the teeth of the other rotor member, thereby mechanically joining the first rotor member and the second rotor member.

The first rotor member and the second rotor member may be obtained by using a band saw to cut a single piece of material which has previously been formed into a cup shape by forging. Said material is cut into shapes with the prescribed numbers of teeth, and said shapes are then separated. As a result, a large number of teeth (i.e., of poles) can be formed. The first rotor member and the second rotor member which have thus been cut apart are fixed together by machining grooves in the tips and bases of the teeth of both rotor members, fitting two rings from both sides into the resulting grooves, and welding from the outside. Such welding is easy and the two rotor members can therefore be joined extremely easily regardless of the number of poles.

Consequently, an expensive welding apparatus does not have to be used. Moreover, because the first rotor member and the second rotor member are accurately positioned by the two rings prior to welding, individual variability is small and stable quality with high precision can be maintained. Furthermore, because the number of poles can easily be increased, the electrical efficiency of the alternator can be increased by raising the frequency of the alternating current which is generated. Finally, because the rings which join the first rotor member and the second rotor member are placed on the outside, it is possible to prevent teeth being deformed to the outside by centrifugal force during high-speed rotation.

### Brief explanation of the drawings

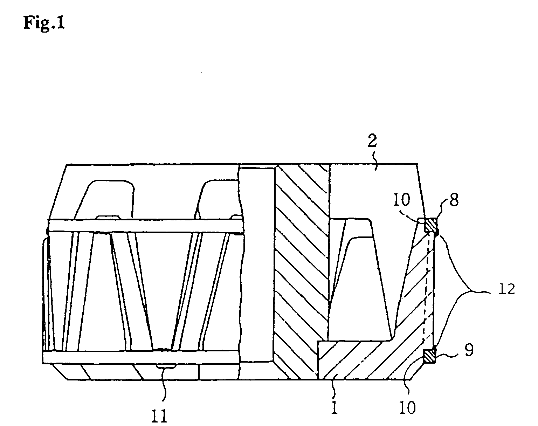

**Fig.1** partially sectional side view showing the construction of the rotor in embodiments of this invention.

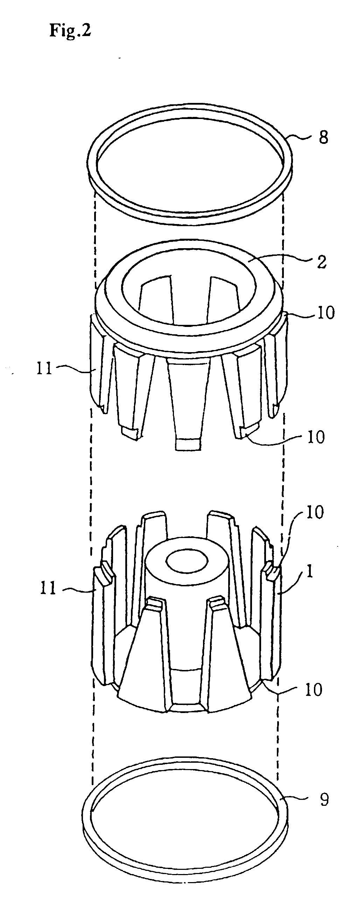

**Fig.2** exploded perspective view of the rotor in embodiments of this invention.

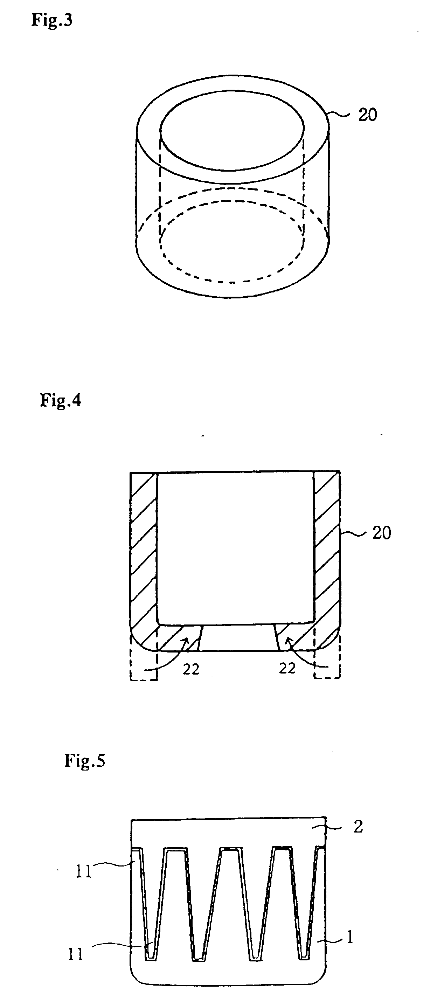

**Fig.3** perspective view showing the shape of the cylindrically-shaped magnetic material in a first embodiment of this invention.

**Fig.4** sectional view showing the shape of the cylindrically-shaped magnetic material after bending of one end in the first embodiment of this invention.

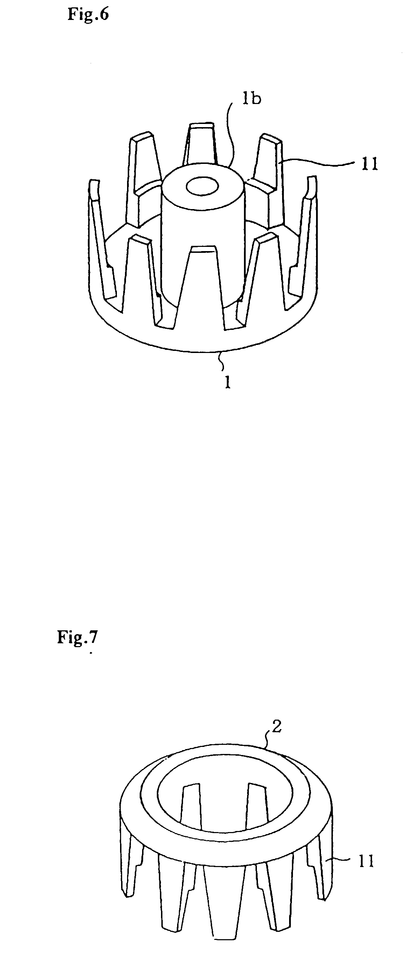

**Fig.5** side view showing the situation when the magnetic material in the first embodiment of this invention has been cut.

**Fig.6** perspective view showing the appearance and shape of the first rotor member in the first embodiment of this invention after attachment of the boss and turning.

**Fig.7** perspective view showing the appearance and shape of the second rotor member in the first embodiment of this invention after turning.

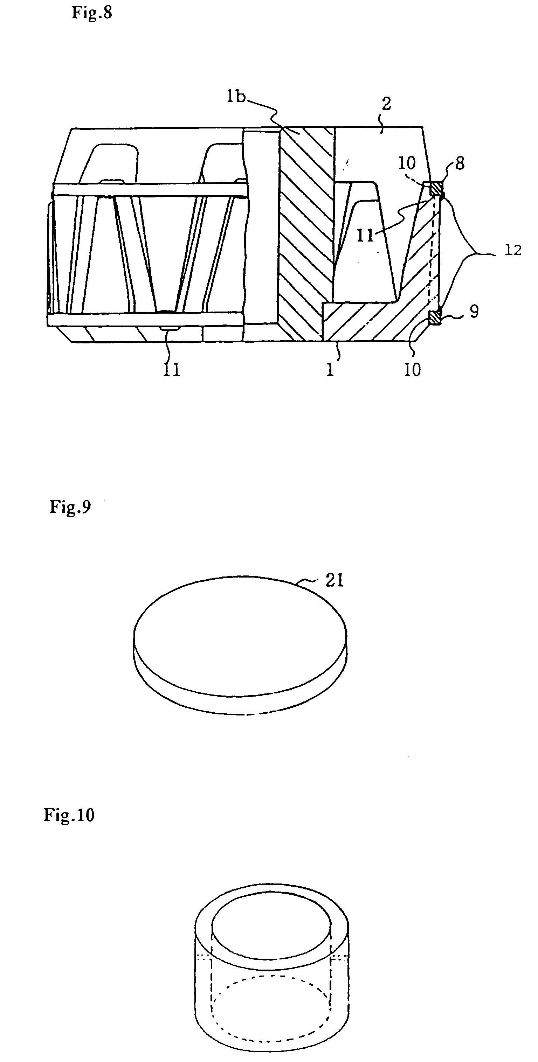

**Fig.8** partially sectional side view showing the rotor assembly in the first embodiment of this invention.

**Fig.9** perspective view showing the shape of the plate-shaped magnetic material in the second embodiment of this invention.

**Fig.10** perspective view showing the appearance of the plate-shaped magnetic material after it has been formed into a cup shape in the second embodiment of this invention.

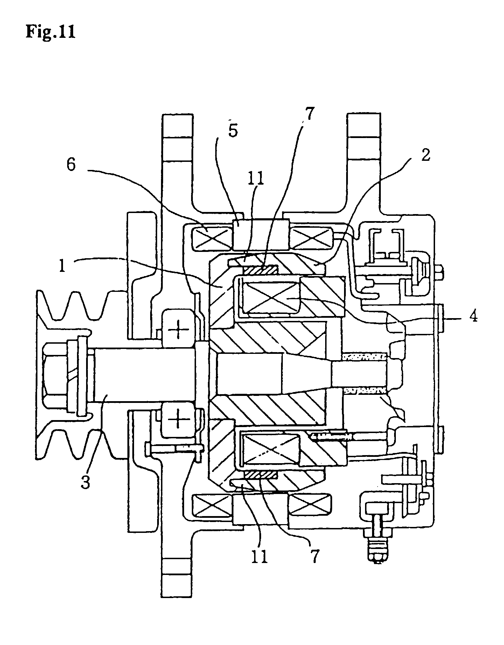

**Fig.11** view showing a conventional rotor fitted to an alternator.

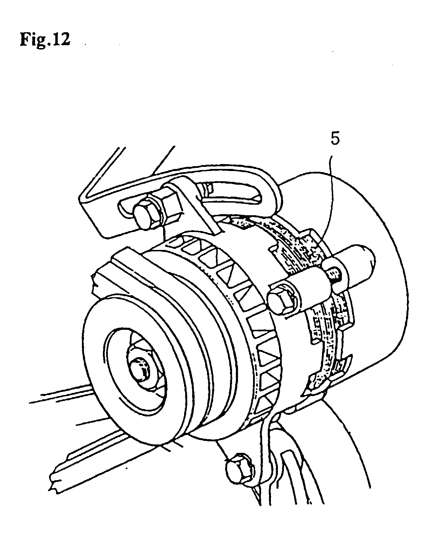

**Fig.12** perspective view showing the appearance and shape of a mounted alternator in both prior art and embodiments of this invention.

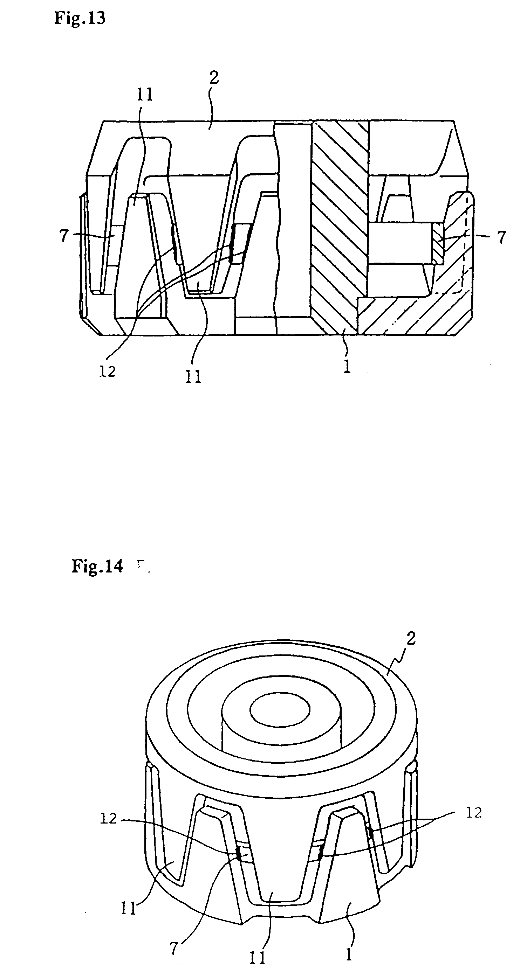

**Fig.13** partially sectional side view showing the construction of a conventional rotor.

**Fig.14** perspective view showing the construction of a conventional rotor.

### Explanation of symbols:

- 1: first rotor member
- 1b: boss
- 2: second rotor member
- 3: rotating shaft
- 4: field coil
- 5: stator
- 6: stator coil
- 7,8,9: rings
- 10: groove
- 11: teeth
- 12: welds
- 20: cylindrically-shaped magnetic material
- 21: plate-shaped magnetic material
- 22: arrows indicating the direction of bending

### Embodiments

Embodiments of this invention will now be explained on the basis of the drawings. **Fig.1** is a partially sectional side view showing the construction of the rotor in embodiments of this invention, while **Fig.2** is an exploded perspective view of the rotor in embodiments of this invention.

Embodiments of this invention have first rotor member 1 on which a plurality of teeth have been formed, plus second rotor member 2 which is arranged so that its teeth 11 are positioned in the spaces in the cylindrical surface formed by teeth 11 of said first rotor member 1. Embodiments of this invention also have, as a distinguishing feature of the invention, two rings 8 and 9 made of a non-magnetic material, each of which is laid across the tips of teeth 11 of one of the aforementioned first and second rotor members 1 and 2, and across the bases of teeth 11 of the other rotor member, thereby mechanically joining the two rotor members. Embodiments of this invention also have grooves 10 which are formed for fitting the two rings 8 and 9 to first and second rotor members 1 and 2.

First rotor member 1 and second rotor member 2 are obtained by using a high-density energy source such as a plasma arc or a laser to cut a single piece of material, which has previously been formed into a cup shape by forging, into shapes with a prescribed number of teeth 11, and then separating the two pieces. Grooves 10 are then machined around the outside of first rotor member 1 and second rotor member 2 at both ends. Second rotor member 2 is then arranged so that its teeth 11 are positioned in the spaces in the cylindrical surface formed by teeth 11 of first rotor member 1.

Once the two rotor members have been put together in this way, they are joined mechanically by fitting ring 8 and ring 9 into respective grooves 10, said rings being fitted from the two ends of the assembly. Next, these rings 8 and 9 and first rotor member 1 and second rotor member 2 are welded from the outside at prescribed positions.

Because the welding operation which joins and fixes first rotor member 1 and second rotor member 2 may be applied to the outer periphery, it is extremely easy to accomplish and can therefore be carried out reliably, and defective places will not be overlooked in an inspection. Moreover, an expensive laser beam welding apparatus is not necessary, and a substantial reduction in manufacturing cost is possible.

An explanation will now be given of the method for manufacturing an alternator rotor according to embodiments of this invention.

### First embodiment of manufacturing method

**Fig.3** is a perspective view showing the shape of the cylindrically-shaped magnetic material in a first embodiment of this invention, while **Fig.4** is a sectional view showing the shape of said cylindrically-shaped magnetic material after bending has been applied to one end.

In this first embodiment, one end of cylindrically-shaped magnetic material 20 shown in **Fig.3** is bent as shown in **Fig.4** by forging or pressing. After cylindrically-shaped magnetic material 20 has been bent as shown by arrows 22, a given position on its outer periphery is mounted on a mounting jig. The mounting jig used is one which rotates and moves in the ***X*** and ***Y*** directions under numerical control. Cylindrically-shaped magnetic material 20 is then cut into shapes on which a prescribed number of teeth 11 are formed, this cutting being carried out by means of a high-density energy source such as a plasma arc or a laser.

**Fig.5** is a side view showing the situation after this cutting has been carried out. **Fig.6** is a perspective view showing the shape of the first rotor member after these two cut shapes have been separated, and **Fig.7** is a perspective view showing the shape of the second rotor member after the separation. The bent part of first rotor member 1 is turned and boss 1b fixed to it by press fitting or welding, and any required turning is carried out on the basis of this boss 1b. Any turning required for second rotor member 2 is then carried out.

**Fig.8** shows an example of the rotor assembly. In this example, grooves 10 have been provided in first rotor member 1 and second rotor member 2, and said rotor members have been joined by means of rings 8 and 9, and welded (at welds 12). A rotor manufactured in this way may be incorporated in the alternator shown in Fig. 11.

### Second embodiment of manufacturing method

**Fig.9** is a perspective view showing the shape of the plate-shaped magnetic material in a second embodiment of this invention, while **Fig.10** is a perspective view showing the shape after said plate-shaped magnetic material has been drawn.

According to the second embodiment of this invention, plate-shaped magnetic material 21 shown in **Fig.9** is deep drawn by forging or pressing, and formed into the cup shape shown in **Fig.10**. In other respects, this second embodiment is the same as the first embodiment. First rotor member I and second rotor member 2 of the sort shown in **Fig.6** and **Fig.7** can be manufactured by carrying out subsequent processing as in the first embodiment.

### Effect of the invention

As has been explained above, according to this invention, because two rotor members can be manufactured from a single piece of material, the number of teeth constituting the poles can be increased, and the electrical efficiency of an alternator can be improved. In addition, because the separation of the two rotor members can be carried out automatically, fabrication can be carried out with high precision even when the number of teeth has been increased, and manufacturing manhours can be decreased and cost reduced.

Because the welding which serves to join the first rotor member and the second rotor member can be performed from the outside, which is an easy working position, fewer manhours are involved in welding and variability in welding finish is eliminated. Because defects are not missed in inspection, high quality can be maintained.

Because special welding apparatus is not required and improved product yield is obtained, manufacturing cost can be reduced. Because welding can be carried out easily even when the number of poles has been increased, the electrical efficiency of the finished product can be improved. Because the rings which mechanically join the first rotor member and the second rotor member are placed on the outside, deformation of teeth to the outside by centrifugal force during high-speed rotation can be prevented.

## Claims

1. A method of manufacturing an alternator rotor having first and second rotor members (1,2) provided with teeth (11), the method including a process wherein a cylindrically-shaped magnetic material (20) is cut to match the shape of the teeth (11) of the first rotor member (1), characterised in that
the process of cutting the cylindrically-shaped magnetic material (20) forms two members, one of which is made into the first rotor member (1), and the other member is made into the second rotor member (2).

2. A method as claimed in claim 1, wherein the cylindrically-shaped magnetic material (20) has a shape obtained by bending one end of tube stock inwards.

3. A method as claimed in claim 1, wherein the cylindrically-shaped magnetic material (20) has a cup shape obtained by closing one end.

4. A method as claimed in claim 1, which includes a process of joining a boss (1b) to the aforementioned first rotor member (1).

5. A method as claimed in any one of claims 1 to 4 which includes a process of machining the aforementioned first rotor member (1) and the aforementioned second rotor member (2), which have been obtained by the process.

6. A method as claimed in any one of claims 1 to 5 in which the rotor that is manufactured is a rotor in which the second rotor member (2) is so arranged that its teeth (11) are positioned in the spaces in the cylindrical surface formed by the teeth (11) of the first rotor member (1), and the method further comprises providing two rings (8,9), each of which is laid across the tips of the teeth (11) of one of the aforementioned two rotor members (1,2) and across the bases of the teeth of the other rotor member, thereby mechanically joining the two rotor members.

7. A method as claimed in claim 6, wherein grooves (10) into which the aforementioned two rings (6,9) can be fitted are formed in the aforementioned two rotor members (1,2).

8. A method as claimed in claim 6 or 7 in which the two rings (8,9) extend around the outside of the rotor members (1,2).

## Patentansprüche

1. Verfahren zur Herstellung eines Wechselstromgenerator-Rotors mit einem ersten und zweiten Rotorelement (1,2), die mit Zähnen (11) versehen sind, wobei das Verfahren einen Arbeitsgang einschließt, bei dem ein zylindrisch geformtes magnetisches Material (20) geschnitten wird, so daß es mit der Form der Zähne (11) des ersten Rotorelementes (1) übereinstimmt, dadurch gekennzeichnet, daß
der Arbeitgang des Schneidens des zylindrisch geformten magnetischen Materials (20) zwei Elemente bildet, von denen eines zum ersten Rotorelement (1) gefertigt wird und das andere Element zum zweiten Rotorelement (2) gefertigt wird.

2. Verfahren nach Anspruch 1, bei dem das zylindrisch geformte magnetische Material (20) eine Form aufweist, die durch Umbiegen eines Endes von rohrförmigem Ausgangsmaterial nach innen erhalten wird.

3. Verfahren nach Anspruch 1, bei dem das zylindrisch geformte magnetische Material (20) eine Becherform aufweist, die durch Verschließen eines Endes erhalten wird.

4. Verfahren nach Anspruch 1, das einen Arbeitsgang einschließt, bei dem eine Nabe (1b) mit dem obenerwähnten ersten Rotorelement (1) verbunden wird.

5. Verfahren nach einem der Ansprüche 1 bis 4, das einen Arbeitsgang zum maschinellen Bearbeiten des obenerwähnten ersten Rotorelementes (1) und des obenerwähnten zweiten Rotorelementes (2) einschließt, die durch den Arbeitsgang erhalten worden sind.

6. Verfahren nach einem der Ansprüche 1 bis 5, bei dem der Rotor, der hergestellt wird, ein Rotor ist, bei dem das zweite Rotorelement (2) so angeordnet ist, daß seine Zähne (11) in den Zwischenräumen in der zylindrischen Oberfläche angeordnet sind, die durch die Zähne (11) des ersten Rotorelementes (1) gebildet werden, und das Verfahren weiter umfaßt: Bereitstellen von zwei Ringen (8,9), von denen jeder über die oberen Enden der Zähne (11) eines der obenerwähnten zwei Rotorelemente (1,2) und über die unteren Enden der Zähne des anderen Rotorelementes gelegt wird, wodurch die beiden Rotorelemente mechanisch miteinander verbunden werden.

7. Verfahren nach Anspruch 6, bei dem Nuten (10), in welche die obenerwähnten zwei Ringe (6,9) eingepaßt werden können, in den obenerwähnten zwei Rotorelementen (1,2) gebildet werden.

8. Verfahren nach Anspruch 6 oder 7, bei dem sich die beiden Ringe (8,9) um die Außenseite der Rotorelemente (1,2) herum erstrecken.

## Revendications

1. Procédé de fabrication d'un rotor d'alternateur ayant des premier et deuxième éléments de rotor (1,2) pourvus de dents (11), le procédé comprenant un processus dans lequel un matériau magnétique de forme cylindrique (20) est découpé pour correspondre à la forme des dents (11) du premier élément de rotor (1), caractérisé en ce que
le processus de découpe du matériau magnétique de forme cylindrique (20) forme deux éléments, dont l'un est destiné à être le premier élément de rotor (1) et l'autre élément est destiné à être le deuxième élément de rotor (2).

2. Procédé selon la revendication 1, dans lequel le matériau magnétique de forme cylindrique (20) a une forme obtenue en courbant une extrémité d'un profilé de tube vers l'intérieur.

3. Procédé selon la revendication 1, dans lequel le matériau magnétique de forme cylindrique (20) a une forme de coupelle obtenue en fermant une extrémité.

4. Procédé selon la revendication 1, qui comprend un processus consistant à joindre un bossage (1b) au premier élément de rotor mentionné précédemment (1).

5. Procédé selon l'une quelconque des revendications 1 à 4, qui comprend un processus consistant à usiner le premier élément de rotor mentionné précédemment (1) et le deuxième élément de rotor mentionné précédemment (2), qui ont été obtenus par le processus.

6. Procédé selon l'une quelconque des revendications 1 à 5, dans lequel le rotor qui est fabriqué est un rotor dans lequel le deuxième élément de rotor (2) est agencé de manière que ses dents (11) soient positionnées dans les espaces dans la surface cylindrique formés par les dents (11) du premier élément de rotor (1), et le procédé comprend en outre le fait de prévoir deux bagues (8,9), dont chacune est disposée en travers des pointes des dents (11) de l'un des deux éléments de rotor mentionnés précédemment (1,2) et en travers des bases des dents de l'autre élément de rotor, joignant ainsi mécaniquement les deux éléments de rotor.

7. Procédé selon la revendication 6, dans lequel des rainures (10) dans lesquelles les deux bagues mentionnées précédemment (6,9) peuvent être ajustées sont formées dans les deux éléments de rotor mentionnés précédemment (1,2).

8. Procédé selon la revendication 6 ou 7, dans lequel les deux bagues (8,9) s'étendent autour de la partie extérieure des éléments de rotor (1,2).
